(19) **Europäisches Patentamt**

**European Patent Office**

**Office européen des brevets**

(11) Veröffentlichungsnummer: **0 281 058 B1**

(12) **EUROPÄISCHE PATENTSCHRIFT**

(45) Veröffentlichungstag der Patentschrift: **03.02.93**

(51) Int. Cl.⁵: **G07F  7/10**

(21) Anmeldenummer: **88103013.4**

(22) Anmeldetag: **29.02.88**

(54) **Datenaustauschsystem.**

(30) Priorität: **04.03.87 DE 3706957**

(43) Veröffentlichungstag der Anmeldung:
**07.09.88 Patentblatt  88/36**

(45) Bekanntmachung des Hinweises auf die
Patenterteilung:
**03.02.93 Patentblatt  93/05**

(84) Benannte Vertragsstaaten:
**AT BE CH DE ES FR GB IT LI LU NL SE**

(56) Entgegenhaltungen:
**EP-A- 0 112 944        EP-A- 0 140 013**
**EP-A- 0 173 103        GB-A- 2 144 564**
**US-A- 4 310 720        US-A- 4 352 011**

(73) Patentinhaber: **Siemens Nixdorf Informationssysteme AG
Otto-Hahn-Ring 6
W-8000 München 83(DE)**

(72) Erfinder: **Kruse, Dietrich
Ulmenstrasse 9
W-8012 Ottobrunn(DE)**
Erfinder: **Beutelspacher, Albrecht, Prof.
Schwalbenstrasse 78
W-8012 Ottobrunn(DE)**
Erfinder: **Kersten, Annette-Gabriele
Frauenlobstrasse 6
W-6200 Wiesbaden(DE)**

(74) Vertreter: **Fuchs, Franz-Josef, Dr.-Ing. et al
Postfach 22 13 17
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Datenaustauschsystem nach den Merkmalen des Oberbegriffs des Anspruches 1.

Chipkartensysteme zur Authentifikation von in einem Datenaustauschsystem vorgesehenen Terminals und den über eine Chipkarte am System teilnehmenden Benutzern sind beispielsweiser aus EP-A-0 140 013 und GB-A-2 144 564 bekannt.

In modernen Datenverarbeitungs- und Kommunikationssystemen spielt der Schutz der Daten eine immer wichtigere Rolle. Die Qualität eines Systems in bezug auf einen ausreichenden Datenschutz hängt dabei entscheidend davon ab, inwieweit es gelingt, daß der Zugriff zum System nur für berechtigte Personen möglich ist und umgekehrt nichtberechtigte Personen mit absoluter Sicherheit ausgesperrt bleiben. Eine einfache, wenn auch nicht absolut sichere Möglichkeit zur Überprüfung der Zugriffsberechtigung zu einem System sind zum Beispiel sogenannte Paßwörter, die nur dem berechtigten Benutzer bekannt sind und die vom Benutzer beliebig oft geändert werden können. Da bei Paßwörtern die Gefahr besteht, daß sie von Unbefugten ausgespäht oder abgehört werden können, sind zusätzliche Sicherungsmaßnahmen unverzichtbar. Eine dieser Maßnahmen ist zum Beispiel die Ver- und Entschlüsselung der übertragenen Information, eine Maßnahme, die bei Datenverarbeitungssystemen unter anderem auch mit Hilfe der Chipkarte realisierbar ist. Mit der zunehmenden Einbeziehung der Chipkarte in Datenverarbeitungssysteme entsteht andererseits wieder ein zusätzliches Sicherheitsrisiko, weil Chipkarten relativ leicht verloren gehen können. Es muß deshalb unbedingt dafür gesorgt werden, daß die Chipkarte bei Verlust in jedem Fall vor einem eventuellen Mißbrauch geschützt ist. Die Chipkarte ist deshalb so konzipiert, daß auf die in einer gesicherten Chipkarte gespeicherten Daten nur dann zugegriffen werden kann, wenn vom Benutzer vorab ein nur in der Chipkarte abgespeicherter Identifikator, beispielsweise eine persönliche Identifikationsnummer, die sogenannte PIN, eingegeben wird.

Eine weitere Sicherheitsbarriere kann mit Hilfe der Authentifikation der Chipkarte zum System aufgebaut werden. Diese Authentifikation verhindert, daß ein beliebiger Teilnehmer durch die Vorgabe, befugt zu sein, an geheime Informationen im System gelangen kann. Eine wesentliche Voraussetzung für die Authentifikation ist ein persönliches, nicht kopierbares Merkmal des Teilnehmers. Dieses nicht kopierbare Merkmal des Teilnehmers wird mit Hilfe eines geheimen Schlüssels für die Ver- und Entschlüsselung erreicht, der den beiden Partner, das heißt einerseits der Chipkarte und andererseits dem System, und zwar nur diesen beiden Partnern bekannt ist.

Die enge schaltungstechnische Verknüpfung zwischen Chipkarte und Benutzerterminal setzt allerdings auch voraus, daß nicht nur der Benutzer der Chipkarte seine Identität nachweist, sondern daß auch auf der Seite des Terminals sichergestellt ist, daß der Datenfluß im Termninal unmanipuliert abläuft. Dazu gehört zum Beispiel, daß die vom Chipkartenbenutzer eingegebene Identifikationsnummer PIN nicht ausgelesen werden kann und daß vom Terminal angezeigte Daten auch mit den an die Chipkarte übergebenen Daten übereinstimmen. Eine Manipulation derart, daß dem Benutzer vermeintlich echte Daten angezeigt und in der Chipkarte falsche Daten verarbeitet werden, muß daher mit absoluter Sicherheit ausgeschlossen werden.

Der vorliegenden Erfindung liegt daher die Aufgabe zugrunde, eine Datensystem der eingangs genannten Art so auszubilden, daß eine unmanipulierbare Datenflußsteuerung innerhalb des Benutzerterminals gewährleistet ist.

Die Lösung dieser Aufgabe ergibt sich erfindungsgemäß durch die kennzeichnenden Merkmale des Anspruchs 1. Vorteilhafte Ausgestaltungen der Erfindung sind in den Unteransprüchen angegeben.

Im folgenden werden Ausführungsbeispiele der Erfindung anhand der Zeichnung näher erläutert. Dabei zeigen

FIG 1     eine Schaltungsanordnung zum Prüfen des Datenflusses in einem Datenaustauschsystem gemäß der Erfindung

FIG 2     eine Variante der Schaltungsanordnung nach FIG 1.

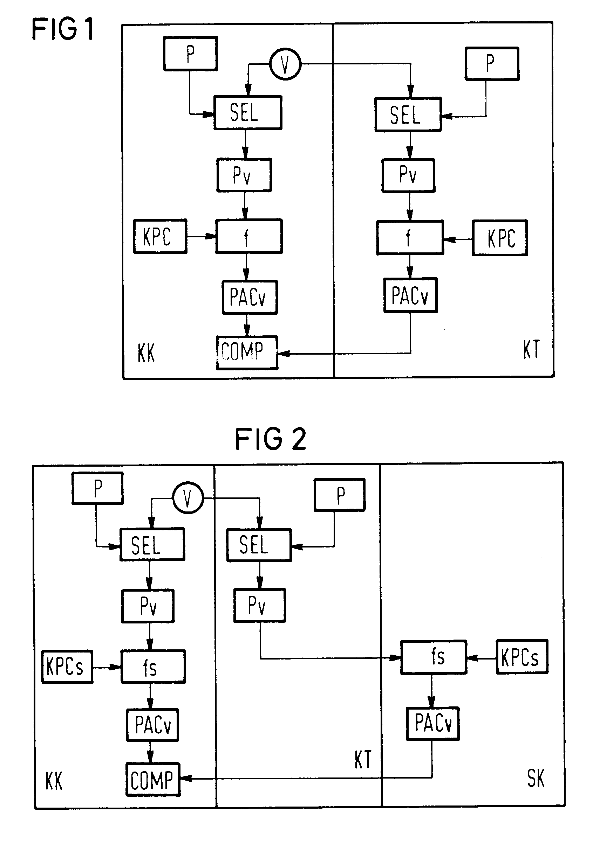

Die FIG 1 zeigt im linken Teil eine als Chipkarte ausgebildete Kundenkarte KK und im rechten Teil ein sogenanntes Kunden-Terminal KT, in denen die für die Erläuterung der Erfindung wesentlichen Schaltungskomponenten dargestellt sind. Ob sich im Kundenterminal KT ein ordnungsgemäßes Programm P zur Datenflußsteuerung befindet, kann entweder von einer Kundenkarte KK vor Eingabe der persönlichen Identifikationsnummer PIN oder von einer Test-Chipkarte etwa bei der täglichen Inbetriebnahme des Terminals überprüft werden. Diese Prüfung erfolgt mit kryptografischen Methoden. Hierzu ist es erforderlich, daß die in einem Speicher des Kundenterminals KT hinterlegten sensitiven Programmteile P bei der Personalisierung in der Kundenkarte oder in einer Testkarte als Referenzdaten abgespeichert werden. Voraussetzung ist ferner, daß im Kundentermiknal KT die sichere Speicherung eines geheimen Schlüssels KPC möglich ist. Außerdem verfügen sowohl die Kundenkarte KK als auch das Kundenterminal KT über einen gemeinsamen Authentifizierungsalgorithmus f. Mit Hilfe dieses Authentifisierungsalgorithmus f und des geheimen Schlüssels KPC wird dann aus den Programmdaten sowohl im Kundenterminal KT als auch in der Kundenkarte KK ein Authentifizierungs-Parameter bzw. Programmauthentifizierungscode PAC berechnet. Um Abhörangriffen und Manipulationen durch Einspielen des Programmauthentifizierungscodes PAC trotz verfälschten Programmes vorzubeugen, wird mit Hilfe einer Zufallszahl v eine dynamische Programm-Prüfung durchgeführt. Die Zufahlszahl v wird in der Kundenkarte KK generiert und außerdem an das Kundenterminal KT übergeben. In Abhängigkeit von der Zufallszahl v wird nun sowohl in der Kundenkarte KK als auch im Kundenterminal KT aus den sensitiven Programmteilen P ein Datenblock Pv ausgewählt (siehe den Baustein SEL.) Die bereits erwähnte Berechnung des Programm-Authentifizierungscodes erfolgt daher auf der Grundlage dieses ausgewählten Datenblocks Pv nach der Beziehung

$$PACv = f (KPC; Pv)$$

Einer der beiden errechneten Programm-Authentifizierungscodes PACv, und zwar der im Kundenterminal KT errechnete, wird schließlich an die Kundenkarte KK übertragen, in der eine dort vorgesehene Vergleichseinrichtung (COMP) feststellt, ob die von der Kundenkarte KK und dem Kundenterminal KT berechneten Resultate übereinstimmen.

Für die sichere Speicherung des sowohl in der Kundenkarte KK als auch im Kundenterminal KT hinterlegten geheimen Schlüssels KPC bieten sich zwei Möglichkeiten an. Die eine Möglichkeit besteht darin, den geheimen Schlüssel KPC in einem sicheren programmierbaren Lesespeicher zu hinterlegen. Bei der zweiten Möglichkeit wird der Schlüssel KPC aus einer speziellen Chipkarte über den Kartenleser des Kundenterminals KT in den Schreib-Lese-Speicher des Kundenterminals eingelesen. Die Stromversorgung für diesen Speicher erfolgt von außen.

Als Authentifizierungsalgorithmus f kommt zweckmäßig eine Einwegfunktion in Betracht. Er sollte jedenfalls eine so geringe Komplexität haben, daß er relativ leicht in einer Chipkarte implementiert werden kann.

Zur Auswahl eines Datenblocks Pv aus den sensitiven Programmdaten P mit Hilfe der Zufallszahl v sind mehrere Möglichkeiten denkbar. Es kann beispielsweise jedes k-te Bit/Byte aus den Programmdaten P gewählt werden, wobei k fest ist und die Zufallszahl v bestimmt, wo mit der Auswahl begonnen werden soll. Oder es ist k = v und der Start erfolgt mit dem ersten Bit/Byte der Programmdaten P. Die Zufallszahl v kann aber beispielsweise auch als Startwert einen weiteren Zufallszahlengenerator anstoßen, dessen Ausgangssignale die Bits/Bytes für den ausgewählten Datenblock Dv festlegen.

Damit in der Kundenkarte KK für die Speicherung der sensitiven Programmdaten nicht zu viel Speicherkapazität in Anspruch genommen werden muß, kann der gespeicherte Programmteil P auch kartenspezifisch sein. Durch die Gesamtheit der Karten wird dennoch die Prüfung des gesamten sensitiven Programmteils P gewährleistet.

Beim Gebrauch unterschiedlicher Kartensysteme in einem Terminal kann die Programmprüfung systemunabhängig durchgeführt werden, indem der Programm-Authentifizierungs-Code PAC nicht im Kundenterminal KT sondern in einem eigenen Sicherheitsmodul, zum Beispiel in einer speziellen Sicherheitskarte SK (siehe FIG 2) in einem Händlerterminal überprüft wird. Dem Kartenanbieter ist damit freigestellt, ob und auf welche Weise die Programmprüfung durchgeführt wird. Insbesondere sind der Authentifizierungsalgorithmus fs und der geheime Schlüssel KPCs vom Anbieter frei wählbar. Ein weiterer Vorteil dieser Form der Programmprüfung ist die Tatsache, daß kein geheimer Schlüssel im Bereich des Kundenterminals KT gespeichert werden muß.

**Patentansprüche**

1. Datenaustauschsystem mit wenigstens einer Dateneingabe-/Datenausgabeeinrichtung und wenigstens einem tragbaren Datenträger in Form einer Chipkarte, bei dem sowohl die Dateneingabe-/Datenausgabeeinrichtung als auch die Chipkarte einen selbständigen programmierbaren Datenspeicher mit zugehöriger Steuer- und Adressenschaltung, einen gemeinsamen, jeweils in einem Mikroprozessor implementierten Authentifizierungsalgorithmus und einen gespeicherter jeweils gleichen Geheimschlüssel enthalten, und bei dem mit Hilfe eines in der Chipkarte vorhandenen Zufallsgenerators eine Zufallszahl (v) erzeugt und an die Dateneingabe-/Datenausgabeeinrichtung (KT) übertragen wird dadurch gekennzeichnet, daß die im Zufallsgenerator erzeugte Zufallszahl (v) jeweils sowohl in der Dateneingabe-/Datenausgabeeinrichtung als auch in der Chipkarte (KK) aus dem Datenspeicher Teile eines Programms (P) zur Datenflußsteuerung auswählt, daß aus diesen Programmteilen (Pv) min Hilfe des Authentifizierungsalgorithmus (f) und des Geheimschlüssels (KPC) jeweils ein Authentifizierungs-Code (PACv) berechnet wird und daß in der Kundenkarte (KK) eine Vergleichseinrichtung (COMP) vorgesehen ist, die den in der Kundenkarte (KK) errechneten Authentifizierungs-Code (PACV) einerseits und den in der Dateneingabe-/Datenausgabeeinrichtung errechneten und in die Chipkarte (KK) übertragenen Authentifizierungs-Code (PACv) andererseits auf Identität prüft.

2. Datenaustauschsystem nach Anspruch 1, **dadurch gekennzeichnet,** daß die in der Dateneingabe-/Datenausgabeeinrichtung (KT) ausgewählten Programmteile (Pv) in ein eigenes Sicherheitsmodul übertragen werden, in welchem der Authentifizierungs-Code (PACv) mit Hilfe des dort hinterlegten Geheimschlüssels (KPCs) und des dort implementierten Authentifizierungsalgorithmus (fs) errechnet und das errechnete Ergebnis direkt an die Vergleichseinrichtung (COMP) in der Chipkarte (KK) übertragen wird.

3. Datenaustauschsystem nach Anspruch 1, **dadurch gekennzeichnet,** daß das Sicherheitsmodul als Steckkarte (SK) ausgebildet ist.

4. Datenaustauschsystem nach einem der vorhergehenden Ansprüche, **dadurch gekennzeichnet,** daß die Auswahl der Daten (Pv) aus dem Programm (P) für die Datenflußsteuerung in der Weise erfolgt, daß jedes k-te Bit oder Byte ausgewählt wird.

5. Datenaustauschsystem nach einem der vorhergehenden Ansprüche, **dadurch gekennzeichnet,** daß die Auswahl der Programmdaten (P) durch einen zweiten Zufallszahlengenerator gesteuert wird, der vom Ausgangssignal des ersten Zufallszahlengenerators angestoßen wird.

**Claims**

1. Data exchange system having at least one data input/data output means and at least one portable data carrier in the form of a chip card, in which both the data input/data output means and the chip card contain an independent programmable data memory with associated control and address circuit, a common authentication algorithm implemented in a microprocessor in each case, and a stored secret cipher that is identical in each case, and in which a random number (v) is generated with the assistance of a random number generator present in the chip card and is transmitted to the data input/data output means (KT), characterised in that the random number (v) generated in the random number generator selects parts of a program (P) for data flow control from the data memory both in the data input/data output means and in the chip card (KK) in each case, in that an authentication code (PACv) is calculated from said program parts (Pv) in each case with the assistance of the authentication algorithm (f) and of the secret cipher (KPC), and in that a comparison means (COMP) is provided in the customer card (KK) which verifies the identity of on the one hand the authentication code (PACV) calculated in the customer card (KK) and on the other hand the authentication code (PACv) calculated in the data input/data output means and transmitted into the chip card (KK).

2. Data exchange system according to Claim 1, characterised in that the program parts (Pv) selected in the data input/data output means (KT) are transmitted into their own security nodule in which the authentication code (PACv) is calculated with the assistance of the secret cipher (KPCs) stored there and the authentication algorithm (fs) implemented there, and the calculated result is transmitted directly to the comparison means (COMP) in the chip card (KK).

3. Data exchange system according to Claim 1, characterised in that the security module is designed as a plug-in card (SK).

4. Data exchange system according to one of the preceding claims, characterised in that the data (Pv) are selected from the program (P) for the data flow control in such a way that every $k^{th}$ bit or byte is selected.

5. Data exchange system according to one of the preceding claims, characterised in that the selection of the program data (P) is controlled by a second random number generator which is triggered by the output signal of the first random number generator.

**Revendications**

1. Système pour l'échange de données ayant au moins un dispositif d'entrée/sortie des données et au moins un support de données portatif sous la forme d'une carte à puce, dans lequel non seulement le dispositif d'entrée/sortie des données mais aussi la carte à puce comportent une mémoire de données programmable autonome, à circuit de commande et d'adresse associé, un algorithme d'authentification commun, respectivement mis en oeuvre dans un microprocesseur et une même clé secrète mémorisée pour chacun, et dans lequel, à l'aide d'un générateur de nombres aléatoires présent dans la carte à puce, un nombre aléatoire (V) est créé et est transféré dans le dispositif d'entrée/sortie des données (KT), caractérisé en ce que le nombre aléatoire (V) créé dans le générateur de nombres aléatoires sélectionne de la mémoire de données, non seulement dans le dispositif d'entrée/sortie des données, mais aussi dans la carte à puce (KK), respectivement des parties d'un programme (P) par une commande du flux des données, que de ces parties du programme (Pv) et avec l'aide de algorithme d'authentification (f) et de la clé secrète (KPC), un code d'authentification (PACv) est calculé et qu'il est prévu, dans la carte de l'utilisateur (KK), un dispositif de comparaison (COMP), qui identifie, d'une part, le code d'authentification (PACV) calculé dans la carte de l'utilisateur, et, d'autre part, le code d'authentification (PACv) calculé dans le dispositif d'entrée/sortie des données et transféré dans la carte à puce (KK).

2. Système pour l'échange de données selon la revendication 1, caractérisé en ce que les parties du programme (Pv) sélectionnées dans le dispositif d'entrée/sortie des données sont transférées dans un module de sécurité propre, dans lequel le code d'authentification (PACv) est calculé à l'aide de la clé secrète (KPCs) qui est mémorisée et à l'aide de l'algorithme d'authentification (fs) y est mis en oeuvre, le résultat du calcul étant transféré directement au dispositif de comparaison de la carte à puce (KK).

3. Système pour l'échange de données selon la revendication 1, caractérisé en ce que le module de sécurité est réalisé sous la forme d'une carte de circuit imprimé embrochable.

4. Système pour l'échange de données selon l'une des revendications précédentes, caractérisé en ce que la sélection des données (Pv) dans le programme (P) a lieu, pour la commande du flux des données, de manière que chaque k-ième bit ou byte soit sélectionné.

5. Système pour l'échange de données selon l'une des revendications précédentes, caractérisé en ce que la sélection des données du programme (P) est commandée à l'aide d'un second générateur de nombres aléatoires qui est déclenché par le signal de sortie du premier générateur de nombres aléatoires.

**FIG 1**

**FIG 2**